Europäisches Patentamt

European Patent Office

Office européen des brevets

(11) Publication number: **0 149 305**
**A1**

## (12) EUROPEAN PATENT APPLICATION

(21) Application number: **84307499.8**

(22) Date of filing: **31.10.84**

(51) Int. Cl.⁴: **B 65 G 47/29**

(30) Priority **20.12.83 US 563447**

(43) Date of publication of application:
**24.07.85 Bulletin 85/30**

(84) Designated Contracting States:
**CH DE FR GB IT LI**

(71) Applicant: **Burlington Industries, Inc.**
**3330 West Friendly Avenue**
**Greensboro North Carolina 27420(US)**

(72) Inventor: **Campbell, Arlin L.**
**1805 Furman Place**
**Greensboro North Carolina 27410(US)**

(74) Representative: **Smart, Peter John et al,**
**W.H. BECK, GREENER & CO 7 Stone Buildings Lincoln's Inn**
**London WC2A 3SZ(GB)**

(54) Yarn package positioning system.

(57) A system for positionally separating cylindrical articles (14). such as cylindrical yarn packages, so as to facilitate the automatic transfer thereof generally includes a downwardly inclined ramp (30) over which the articles can sequentially roll and plural positioning elements (40) each of which defines planar upstream and downstream portions (44,46) angularly oriented with respect to one another. The elements are pivotal between inactive and active positions in response to rolling movement of the articles thereon so that when rolling movement of one article is arrested, the next successive article will bear agains the upstream portion thereby defining the desired separation distance between the pair of articles associated with a respective one of the positioning elements. A flange (48) fixed to the upstream portion defines a surface against which an article will bear when the positioning element is in an active position so that a downstream vector force is established thereby to maintain the blocking effect upon upstream articles in the event a downstream article is removed. The flange also provides an area of additional weight to the upstream portion to further bias the element into gravitatingly pivoting to the inactive position when not under the influence of any articles.

./...

Croydon Printing Company Ltd

*Fig. 1*

- 1 -

## YARN PACKAGE POSITIONING SYSTEM

The present invention relates generally to an automatic materials handling system and, more specifically, to a system which automatically positions adjacent cylindrical yarn packages so as to facilitate automated removal therefrom.

In today's modern textile mills, automated package transfer systems are typically utilised to transfer cylindrical yarn or textile packages from one conveyance path to another conveyance path or to a storage site. Such textile packages usually have a hollow core element around which fabric, yarn or other textile material is wound and which serves as the support for the material. When automated handling systems are utilised they are therefore engineered to engage the interior hollow of the core elements rather than the textile material wound therearound. Thus to ensure proper alignment and engagement of the automated transfer means with the hollow core elements, separation distances between packages must be maintained within close tolerances and moreover such separation distances must be capable of reptitive reproduction to ensure proper functioning of the automated transfer means.

- 2 -

The art has, of course, broadly considered the problem of establishing positional accuracy of plural packages, bottles or the like. However, such prior systems are "fluid" in nature. That is, while such systems establish proper separation distances between positioned elements, once the blocking effect is eliminated from upstream elements by virtue of the removal of a downstream element(s), the upstream elements advance to occupy the space created by the downstream element (see, U.S. Patent Nos. 1,819,032 to Lehman and 3,327,835 to Wunsche). This "fluid" operation is precisely what the present invention seeks to avoid.

The present invention now provides apparatus for positioning rollable articles at predetermined spacings comprising a downwardly inclined ramp means down which said articles are rollable,

at least one positioning element means associated with said ramp means and actuable by the presence of a said rollable article of suitable dimensions to adopt a position in which to arrest a subsequent such article at a respective second location in said ramp means and characterised by being such as thereafter to maintain said subsequent article in said arrested state even upon removal of said first mentioned article.

Preferably, said positioning element means are pivotable rockers biassed to lie normally in a position permitting rolling of articles thereover but pivotable to a postion to prevent said rolling.

Preferably, said rockers pivot about an axis transverse to said ramp means.

Preferably, said rockers comprise a pair of arm members joined at said pivot axis and making an obtuse angle with one another.

Preferably, the one of said arm members extending up said ramp means is longer and hence heavier than the other of said arm members. Alternatively, it may be biassed to lift the other arm by alternative means, e.g. by being heavier without being longer or by the provision of means such as a spring acting to provide the desired bias.

In accordance with the present invention, the above objects may be achieved with a positioning system having relatively few moving parts. Thus, the present invention provides in its preferred aspects a system whereby cylindrical textile packages can be accurately and reliably positioned to facilitate the use of automated transfer means.

Preferred features of apparatus according to the invention will now be described.

As stated previously, accurate positioning of the centres of the yarn package cores relative to one another is important to effect automatic transfer of plural yarn packages from the positioning apparatus. In order to accomplish this function, a downwardly inclined ramp may be aligned in operative association with a conventional conveyor belt, for example. The cylindrical yarn packages are initially conveyed along the conveyor belt in a random spaced-apart manner and are disposed relative to the direction of travel therealong such that the longitudinal axis of each core is substantially aligned with the belt's direction of movement. This orientation of the yarn packages prevents them from rolling along the conveyor belt so as to ensure that they are relatively stationary when being moved.

A vertically disposed rod may be mounted near the end of the conveyor belt upstream from the inclined ramp and is disposed approximately one-half the thickness of the yarn package from the centre line of the conveyor. Thus, as each yarn package successively bears against the rod due to the forward movement provided by the conveyor, the packages will be pivoted through about 90° so that the longitudinal axis of the core is substantially transverse to the direction of movement of the packages on the conveyor. That is, after passing downstream of the rod the circumferential surface of each yarn package is aligned with the direction of movement of the conveyor belt and thus will be aligned with the inclined ramp. This turning movement thereby permits the yarn packages to roll from the conveyor belt onto the downwardly inclined ramp.

The inclined ramp is utilized so as to accurately position plural yarn packages relative to one another so that the centre to centre spacing (or at least the edge to edge spacing) between adjacent packaages is approximately equal. To accomplish this, the inclined ramp is provided with plural positioning members which are bent along a line transverse to the direction of movement of the yarn packages to form a downstream leg and an upstream leg which is significantly longer than the downstream leg. Each positioning member is pivotally attached to the inclined ramp at the bend joining the upstream and downstream legs to thereby form an axis about which the positioning member pivots.

In operation, preferred apparatus initially begins with the longer upstream legs of each positioning member being in a contiguous relationship with the inclined ramp and the shorter downstream leg being upwardly displaced therefrom. As a yarn package rolls over the ramp-contiguous upstream leg of a

0149305

- 3c -

positioning member and then bears against the shorter downstream leg, the positioning member will pivot about its pivot axis so as to upwardly displace the upstream leg thus bringing the downstream leg into a ramp-contiguous relationship.

The first yarn package to be positioned in the device will roll over all upstream positioning members and will eventually abut against a stop member while resting upon the downstream leg of the last positioning member so that the weight of the yarn package maintains the downstream leg in a ramp-contiguous relationship while the upstream leg thereof is upwardly displaced. The upstream positioning members over which the first yarn packaged rolled prior to coming to rest against the stop member will have their upstream legs returned to the ramp-contiguous relationship by gravity so as to permit the next successive yarn package to roll thereacross.

The next successive yarn package will therefore come to rest against the leading edge of the upwardly displaced upstream leg of the first positioning member while the weight of the yarn package pivots the downstream leg of the next adjacent upstream positioning member into a ramp-contiguous relationship thereby responsively displacing its respective upstream leg. This procedure is repeated until the desired number of yarn packages are positioned on the ramp.

Once all the positioned yarn packages are removed from the ramp in a predetermined removal sequence, the increased length of the upstream legs of each positioning member will cause gravity bias to occur so that each upstream leg will pivotally move to its ramp-contiguous position in preparation for the next cycle.

One particularly important aspect of the present invention is that suitable structures are provided which maintain the blocking effect on upstream yarn packages even though one or more downstream yarn packages are removed from the system. Stated otherwise, the present invention will not allow upstream yarn packages to advance when any downstream yarn package is removed from the system. Thus, the present invention functions so as to position textile fabrics accurately and to maintain such accuracy with respect to upstream packages regardless of whether any downstream package is removed. The present invention is therefore believed more versatile in operation in that groups of packages or individual packages can be removed from the sytem by suitable transfer means without destroying the position of any upstream package.

Thus, in accordance with a preferred aspect of the present invention, a downwardly extending flange element is fixed to the upstream leg of each positioning element. The upstream leg of the positioning element will assume an inclined orientation in a direction opposing package movement in response to an immediately preceding package coming to rest upon the downstream leg of the element. The flange member will thus be raised above the surface of the ramp to intercept the next successive textile package rolling thereon. Accordingly, when the next successive yarn package comes to rest against the flange member, proper separation of the core elements of a pair of packages will be established, e.g. the package resting upon the downstream leg of the positioning element (hereinafter the "downstream package") and the package resting against the flange member fixed to the upstream leg of the positioning element (hereinafter the "upstream package"). As can be appreciated, for each positioning element of the present invention which is provided, a corresponding

- 6 -

number of packaging pairs can be positioned.

As the upstream package bears against the flange member, an upward force component is established due to the inclined nature of the ramp and the height and angle that the flange contacts the circumferential cylindrical surface of the textile package so as to counteract the tendancy of the element to gravitatingly return to its rest position. Thus, should the upstream package be removed, the positioning element will remain in its operative position due to the weight of the downstream package resting upon the downstream leg of the element. Similarly, should the downstream package be removed, the upstream package will remain in position by virtue of the operative interaction of the flange member as briefly described previously. Of course, the upstream an downstream packages could be concurrently removed if considered desirable or necessary. These features, and others, will become more clear to the reader after careful consideration is given to the detailed description of a preferred exemplary emobodiment thereof which follows.

Reference will hereinafter be made to the accompanying drawings wherein like reference numerals throughout the various Figures denote like structural elements and wherein:

Figure 1 is a perspective view of a textile package handling system incorporating the novel positioning device of the present invention;

Figure 2 is a cross-sectional elevational view of an exemplary positioning element of the device of the present invention shown in an operative position; and

Figures 2a-2e schematically depict in elevation view the sequence of operation of the positioning device of the present invention.

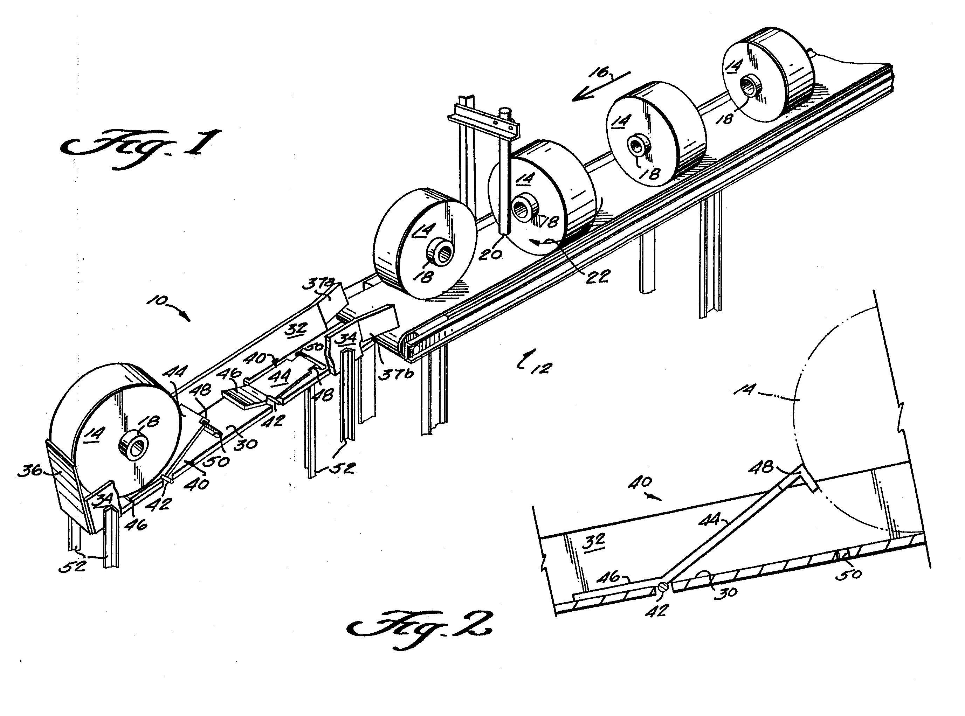

Referring now more particularly to the accompanying drawings wherein a particularly preferred embodiment of the present invention is depicted, it can be seen in Figure 1 that a complete yarn package positioning system includes the positioning device 10 of the present invention and a conveyor 12 which in and of itself is conventional to move yarn packages 14 thereon along a predetermined path of conveyance (noted by arrow 16 in Figure 1).

Each yarn package 14 is substantially cylindrical in shape and includes a cylindrical core member 18 therein. To prevent yarn packages 14 from rolling along the surface of conveyor 12, the axis defined by core element 18 is initially aligned so as to be substantially parallel to the path of conveyance (arrow 16). Just upstream of the terminal end of conveyor 12, a rod 20 is vertically disposed in the path of conveyance of the yarn packages 14 so that the packages 14 will be pivotally turned through approximately 90° to permit them to roll from conveyor 12 and onto the ramp positioner 10 of the present invention. Rod 20 is disposed approximately one-half the thickness of the yarn packages from the conveyor 12 centerline. Therefore, movement of yarn package 14 on conveyor 12 will cause the yarn packages to successively bear against rod 20 and thus rod 20 will act as a pivot line around which yarn packages 14 will successively be pivoted (arrow 22 in Figure 1). Accordingly, whereas upstream of rod 20 the yarn packages will be prevented from rolling in the direction of conveyance (arrow 16), downstream of rod 20 such rolling movement will be permitted and, indeed, is desirable so that yarn packages 14 will be successively moved into operative association with ramp positioner 10 without further driven means being provided.

The ramp positioner 10 of the present invention generally includes an inclined planar ramp portion 30 having side walls 32, 34 fixed thereto so as to define an open channel into which the yarn packages 14 are guided. Limit member 36 is fixed to walls 32, 34 at the downstream end of ramp 30 so as to establish the extent of movement of yarn packages 14 across ramp 30. Opposing inlet guide members 37a, 37b are rigidly fixed to walls 32, 34, respectively, and are divergingly disposed relative to one another in an upstream direction so that the dimension between the guide members 37a, 37b is greater in the areas where a yarn package 14 initially encounters them and gradually decreases towards the channel defined by walls 32, 34. Thus, guide members 37a, 37b serve to guide those yarn packages 14 which are not in exact alignment with ramp 30 after they encounter rod 20 into the channel defined by the side walls 32, 34.

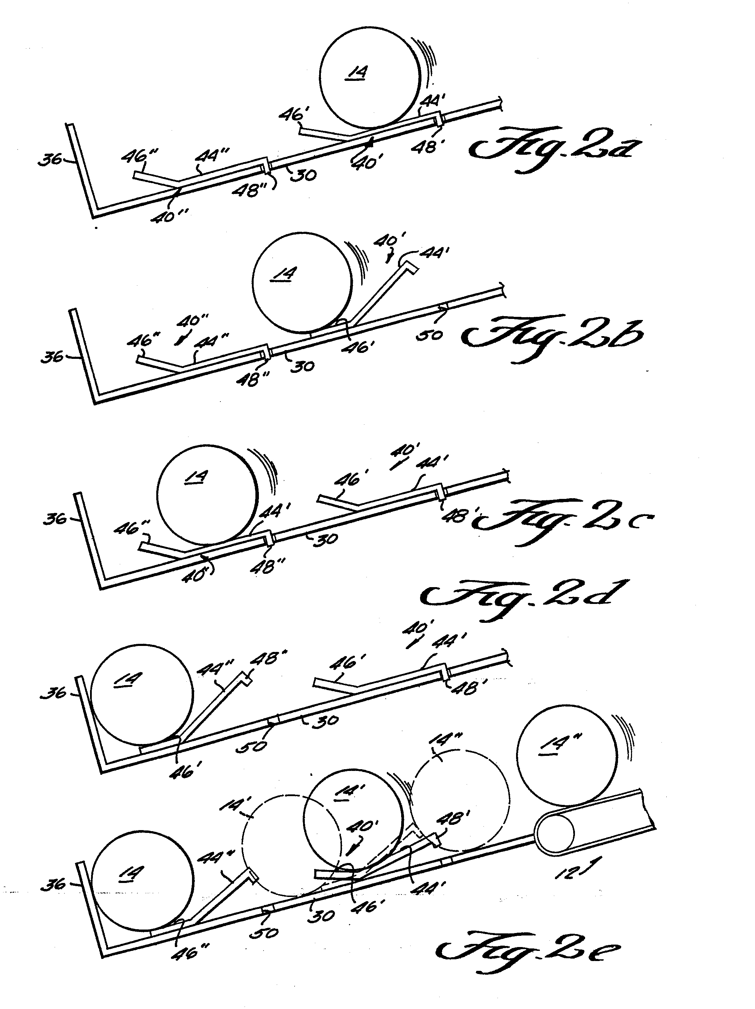

Ramp 30 includes plural positioning elements 40 (a representative positioning element 40 is shown in accompanying Figure 2) each pivotally connected to the sidewalls 32, 34 by a suitable pivot pin 42. Each positioning element 40 is provided with an upstream leg 44 and a downstream leg 46 rigidly interconnected to one another so as to form a predetermined angle therebetween. Preferably, the angle formed between upstream and downstream legs 44, 46, respectively, is about 150° so that when each is pivotally moved from its ramp-contiguous position, an angle of about 30° is formed with ramp 30. The line of interconnection between upstream and downstream legs 44, 46, respectively, occurs along a line substantially coincident to the axis of pivot pin 42 about which elements 40 pivot. Thus, due to the angular orientation of upstream leg 44 and downstream leg 46, when one of the legs is pivotally moved so as to be in a contiguous relationship with ramp 30, the other will form an angle of about 30° relative to ramp 30.

Upstream leg 44 is dimensioned so as to be longer than downstream leg 46 so that upstream leg 44 will gravitatingly return to a contiguous relationship with respect to ramp 30 as will be described in further detail below. Thus, the dimension of upstream leg 44 is about two times longer than downstream leg 46 and terminates in flange 48. Elongated apertures 50 are provided in ramp 30 so as to accommodate flange 48 when upstream leg 44 is in a ramp-contiguous position.

Flange 48 defines a surface against which a yarn package will bear when element 40 is pivoted so as to dispose upstream leg 44 in an active position e.g. an upwardly inclined relationship relative ramp 30 (see Figure 2). Thus, a vector force in the downstream direction is exerted against the flange 48 so that when a yarn package is removed from the downstream leg 46, element 40 will remain in its active position. Moreover the additional mass provided by flange 48 at the end of upstream leg 44 will create a greater cavity bias to positively return element 40 to its inactive position. Preferably, flange 48 is downwardly disposed relative upstream leg 44 and forms a right angle therewith.

Preferably, ramp 30 is disposed relative to horizontal so as to form a 5° downward slope as viewed from conveyor 12. Thus, once the yarn packages 14 are pivotally turned through approximately 90° by virtue of rod 20, they are conveyed into the channel defined by opposing walls 32, 34 by virtue of the continued driven conveyance of conveyor 12 to its terminal end and, thereafter, will roll by gravity along ramp 30 due to its downward slope thereof. Mounting legs 52 can be provided so as to establish the downward slope of ramp 30 in a manner which is believed to be known to those in this art.

The operation of the present invention will now be described in further detail and particular reference will be made to accompanying Figures 2a-2e hereof which schematically depict the yarn package positioning sequence which can be accomplished thereby.

As shown in Figure 2a, yarn package 14 will roll downwardly on ramp 30 due to the downward incline thereof and will first encounter the upstream-most positioning element 40'. Thus, since the upstream leg 44' of positioning element 40' is in its normal or "rest" position (that is, in a contiguous relationship with ramp 30), yarn package 14 will roll along the top surface thereof until it encounters the then upwardly inclined downstream leg 46'. At this stage of the positioning operation, the next successive downstream positioning element 40" is similarly in a normal or "rest" position in that its upstream leg 44" is in a contiguous relationship with respect to ramp 30 while the downstream leg 46" is in its upwardly inclined position.

Upon continued rolling movement of yarn package 14 along the surface of upstream leg 44' of positioning element 40', yarn package 14 will bear against downstream leg 46' and the weight of yarn package 14 coupled with the continued downward rolling movement thereof along ramp 30 will responsively cause position element 40' to be pivotally moved until downstream leg 46' is in a contiguous relationship with ramp 30 (see Figure 2b). At this point in time, the upstream leg 44' will be upwardly inclined.

Once yarn package 14 has cleared downstream leg 46', positioning element 40' will gravitatingly pivot to its rest position as shown in Figure 2c while yarn package 14 rolls onto the upstream leg 44" of positioning element 40". Yarn package 14 will bear against downstream leg 46" during its continued rolling movement thereof along ramp 30 and the weight of yarn package 14 will responsively cause positioning element 40" to be pivoted so as to dispose downstream leg 46" in a contiguous relationship with respect to ramp 30 while upstream leg 44" is upwardly inclined relative thereto (see Figure 2d). However, at this point in time, limit member 36 will stop rolling movement of yarn package 14 along ramp 30 so that positioning element 40" will be maintained in its position shown in Figure 2d. Thereafter, successive yarn packages 14' and 14" (see Figure 2e) each roll along ramp 30 in a manner similar to that described above until they respectively bear against flange 48" and 48' as shown in phantom line in Figure 2e.

Since, for example, yarn package 14' bears against flange 48", a vector force is applied against positioning element 40" in the direction of rolling movement of the yarn packages along ramp 30 such that should yarn package 14 be removed from the positioning system 10 of the present invention, the positioning element 40" will be maintained in its "positioned" relationship as shown in Figure 2e due to the vector force exerted thereagainst by yarn package 14'. Similarly, should yarn package 14' be removed when yarn packages 14, 14' and 14" are all in their stationary positioned relationship, positioning element 40" will remain in its pivoted position due the the weight of yarn package 14 bearing against downstream leg portion 46" whereas yarn package 14" will exhibit a vector force component in the downstream direction due to the interaction of the flange 48' therewith. Of course, all three yarn packages 14, 14' and 14" can be concurrently removed from ramp 30 if such is deemed to be desirable and in such a situation elements 40' and 40" will each gravitatingly return to their normal rest position as shown in Figure 2a.

Thus, as the reader will now undoubtedly appreciate, the positioning system in accordance with the present invention provides a novel means by which cylindrical yarn packages can be positionally separated relative to one another so as to facilitate automated removal and transfer therefrom. While only a pair of positioning elements 40 have been shown in the accompanying drawings, the reader should appreciate that either a single positioning element or any preselected plurality of positioning elements can be provided in dependence upon the user's particular needs.

Accordingly, while the present invention has been herein described in what is presently conceived to be the most preferred embodiment thereof, those in this art may appreciate that many modifications may be made thereto, which modifications shall be accorded the broadest scope of the appended claims so as to encompass all equivalent structures, assemblies and/or systems.

0149305

- 14 -

<u>CLAIMS</u>

1. Apparatus for positioning rollable articles (14) at predetermined spacings comprising a downwardly inclined ramp means (30) down which said articles are rollable,

. at least one positioning element means (40) associated with said ramp means and actuable by the presence of a said rollable article of suitable dimensions to adopt a position in which to arest a subsequent such article at a respective second location in said ramp means and characterised by being such as thereafter to maintain said subsequent article in said arrested state even upon removal of said first mentioned article.

2. Means for positionally separating cylindrical articles (14) comprising:

substantially planar ramp means (30) downwardly inclined in a downstream direction and including an inlet at one end to permit said articles to gravitatingly roll onto and along said ramp means and a limit member (36) at the other end thereof to establish the limit of rolling movement of said articles thereon;

at least one positioning element means (40) for positionally separating a sequential pair of articles (14) on said ramp means (30) and including means (42) for

connecting said positioning element means to said ramp means (30) between said inlet and said limit member (36) to permit pivotal movement of said positioning element means (40) between inactive and active positions, said positioning element means (40) including means (44,46) defining substantially planar upstream and downstream legs angularly disposed relative to one another, said positioning element means being biassed to pivot from said active position to said inactive position, and being adapted to be prevented from pivoting from said active position to said inactive position when one of said articles bears against said upstream leg (44) while said positioning element means is in said active position whereby said pivotal movement from said active position to said inactive position is prevented upon removal of a downstream article.

3. Means as claimed in claim 2 wherein said positioning element means (40) includes flange means (48) fixed to said upstream leg (44) for providing a surface against which an article (14) will bear when said positioning element means (40) is in said active position and for providing weighted bias to said positioning element means (40) to facilitate gravity return thereof to said inactive position.

- 16 -

4. Means as claimed in claim 3 wherein said ramp means (30) includes means defining at least one aperture (50) to accomodate said flange means (48) of said at least one positioning element means (40) and to permit said upstream leg (44) thereof to be in a contiguous relationship with said ramp means (30) when said positioning element means (40) is in said inactive position to allow said articles to roll thereon.

5. Means as claimed in any preceding claim further comprising a pair of opposingly separated side walls (32,34) fixed to said ramp means (30) to define therebetween a channel having an open end disposed at said inlet of said ramp means.

6. Means as claimed in claim 5 wherein said pair of walls (32,34) at said open end includes guide means (37a,37b) for guiding said articles into said channel.

7. Means as claimed in claim 5 wherein said guide means includes a pair of guide walls (37a,37b) each fixed to a respective one of said pair of side walls (32,34) and divergingly disposed relative to one another in an upstream direction.

8. Means as claimed in any preceding claim further comprising conveyor means (12) having a terminal end in communication with said inlet to convey said articles (14) along a predetermined path and to deliver said articles (14) to said ramp means (30) at said inlet thereof.

9.   Means as claimed in claim 8 further comprising article pivoting means (20) disposed in said predetermined path to pivot said articles (14) from a first orientation wherein rolling movement of said articles (14) is prevented to a second orientation wherein rolling movement of said articles (14) is permitted.

10.   Means as claimed in claim 9 wherein said article pivoting means includes a fixed position rod (20) substantially vertically disposed in said predetermined path, said articles (14) bearing against said rod (20) to produce pivoting by virtue of the conveyance thereof along said predetermined path by said conveyor means (12).

11.   Means as claimed in claim 10 wherein said rod (20) is disposed in said predetermined path approximately one-half the thickness of the articles (14) as measured from the centreline of said conveyor means (12).

12.   A system for positionally separating cylindrically shaped textile packages (14) of the type having a hollow core element (16), said system comprising in combination:

conveyor means (12) having a terminal end for sequentially conveying said packages (14) along a predetermined path of conveyance, said packages resting on said conveyor means (12) in a first orientation to prevent said packages (14) from experiencing rolling movement thereon during conveyance by said conveyor means (12);

turning means (20) disposed in said conveyance path upstream of said terminal end for turning said packages (14) from said first orientation to a second orientation on said conveyor means (12) to permit said packages (14) to experience rolling movement in the direction of said path of conveyance;

positioning means (10) disposed at said terminal end and in alignment with said path of conveyance to positionally separate said core elements (18) of a predetermined plurality of said packages (14) substantially equally relative to one another to facilitate automatic removal therefrom, said positioning means (10) including means defining a downwardly inclined substantially planar ramp (30) having an upstream end portion disposed adjacent said terminal end of said conveyor means (12) and an end wall (36) rigidly fixed to said planar ramp (30) to define the limit of rolling movement of said packages (14) along said ramp (30), and plural positioning elements (40) being sequentially aligned on said ramp (30) and each including (a) means defining substantially planar upstream (44) and downstream (46) leg portions joined along a line to form an oblique angle therebetween

(b) means (43) for pivotally connecting said positioning element (40) to said ramp (30) to permit pivotal movement about an axis defined by said line between a first position wherein said upstream leg portion (44) is in a contiguous relationship with said ramp (30) while said downstream leg portion (46) is upwardly angularly oriented relative said ramp (30) in a downstream direction and a second position wherein said downstream leg portion (46) is in a continguous relationship with said ramp (30) while said upstream leg portion (44) is upwardly angularly oriented relative said ramp (30) in an upstream direction, and (c) pivot preventing means (48) preventing the gravity return of said positioning element from said second position to said first position when one of said packages bears against said pivot preventing means (48) while said positioning element is in said second position.

13. A system as in claim 12 whrein the leg portions of said plural positioning elements (40) form an oblique angle of about 150°.

Fig.1

Fig.2

*Fig.2a*

*Fig.2b*

*Fig.2c*

*Fig.2d*

*Fig.2e*

| DOCUMENTS CONSIDERED TO BE RELEVANT | | | EP 84307499.8 |
|---|---|---|---|
| Category | Citation of document with indication, where appropriate, of relevant passages | Relevant to claim | CLASSIFICATION OF THE APPLICATION (Int. Cl 4) |
| A | DE - A1 - 2 853 114 (HAUNI-WERKE)<br>* Totality * | 1-8, 12,13 | B 65 G 47/29 |
| A | DE - A1 - 3 105 507 (PAREL)<br>* Totality * | 1-8, 12,13 | |
| A | DE - B2 - 2 214 168 (FROMME)<br>* Totality * | 1-8, 12,13 | |
| A | FR - A1 - 2 468 528 (SOCIÉTÉ SAVOY)<br>* Totality * | 1-8, 12,13 | |
| A | GB - A - 1 254 985 (INTERLAKE)<br>* Totality * | 1-8, 12,13 | **TECHNICAL FIELDS SEARCHED (Int. Cl.4)** |
| A,D | US - A - 1 819 032 (LEHMAN)<br>* Totality * | 1-8, 12,13 | B 65 G 11/00<br>B 65 G 47/00 |
| A,D | US - A - 3 327 835 (WUNSCHE)<br>* Totality * | 1-8 12,13 | |
| A | DE - A1 - 2 750 751 (ENZINGER-UNION WERKE AG)<br>* Totality * | 9-12 | |

The present search report has been drawn up for all claims

| Place of search | Date of completion of the search | Examiner |
|---|---|---|
| VIENNA | 13-03-1985 | NETZER |

## DOCUMENTS CONSIDERED TO BE RELEVANT

EP 84307499.8

| Category | Citation of document with indication, where appropriate, of relevant passages | Relevant to claim | CLASSIFICATION OF THE APPLICATION (Int. Cl. ³) |
|---|---|---|---|
| A | FR - A1 - 2 411 147 (LAMSON SAUNIER DUVAL) <br> * Totality * <br> -- | 9-12 | |
| A | US - A - 2 761 544 (WILLIAMS) · <br> * Totality * <br> ---- | 9-12 | |

TECHNICAL FIELDS
SEARCHED (Int. Cl. ³)

The present search report has been drawn up for all claims

| Place of search | Date of completion of the search | Examiner |
|---|---|---|
| VIENNA | 13-03-1985 | NETZER |